# EUROPÄISCHE PATENTANMELDUNG

(11) **EP 0 737 872 A2**
(43) Veröffentlichungstag der Anmeldung: **16.10.1996**
(21) Anmeldenummer: 96104840.2
(22) Anmeldetag: 27.03.1996
(51) Int. Cl.: G02B 6/12, G02B 6/28

(54) **Optischer Verzweiger**

(30) Priorität: 13.04.1995 DE 19514042
(71) Anmelder: Alcatel SEL Aktiengesellschaft, D-70435 Stuttgart (DE)
(72) Erfinder: Klekamp, Axel, Dr., 71706 Markgröningen (DE)
(74) Vertreter: Schätzle, Albin, Dipl.-Phys.

(57) **Zusammenfassung**

Bei einem optischen Verzweiger (1) mit einem Trägerplättchen (2) und einer integrierten, als Y-Verzweiger ausgebildeten Wellenleiterstruktur, die der Ankopplung wenigstens einer Glasfaser dient, ist der Wellenleiter (3) vor der Verzweigung mit einer als optisches Filter wirkenden Einschnürung versehen, welche die zwangsweise Abstrahlung von unerwünschten Moden bewirkt. Die Einschnürung besteht aus einem ersten Taper (4), mit dem die Breite des Wellenleiters (3) am Eingang des optischen Verzweigers (1) auf einen schmalen Wellenleiterabschnitt (5) reduziert und danach durch einen spiegelbildlich angeordneten zweiten Taper (6) auf die Breite der abzweigenden Wellenleiter (Zweige 7) aufgeweitet ist.

## Beschreibung

Die Erfindung betrifft einen optischen Verzweiger der im Oberbegriff des Anspruchs 1 näher bezeichneten Ausführung. Derartige Verzweiger werden insbesondere in Systemen der optischen Nachrichtentechnik verwendet.

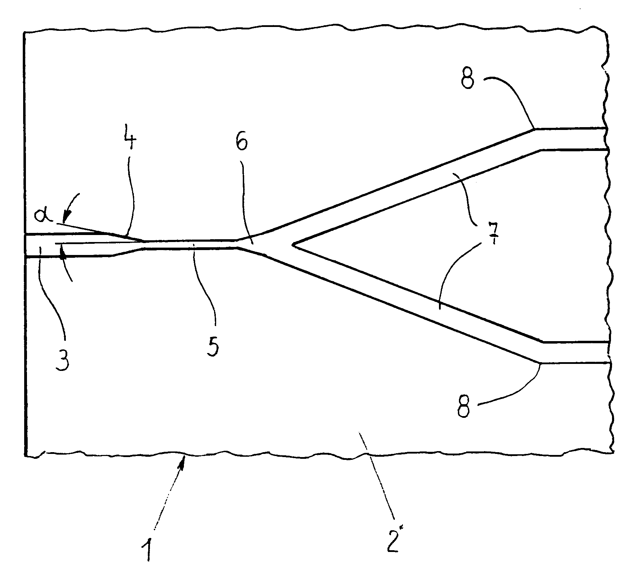

Aus der Druckschrift EP 0 277 390 B1 ist ein optischer Verzweiger bekannt, bei dem auf einem Substrat integrierte optische Wellenleiter vorhanden sind und zwar ein sich von einem Substratende zum gegenüber liegenden Substratende geradlinig erstreckender Eingangswellenleiter mit zwei hintereinander angeordneten Verzweigungen, die je zwei Äste haben. Hierdurch wird eine Aufteilung von 1:5 erreicht. Außerdem sind IOC-Module mit durch Kaskadierung von Y-Verzweigern aufgebauten Baumstrukturen mit einer Aufteilung von z.B. 1:8 bekannt (EP 0 283 301 B1, Fig. 34).

Da in neueren optischen Verteilungsnetzen passive optische Verteiler eine zunehmende Bedeutung haben, sind bereits optische Verzweiger mit Teilungsverhältnissen von 1:N oder 2:N (z.B. N = 2, 4, 8, 16, 32 ...) für die Ankopplung von einmodigen Glasfasern konzipiert worden (ELECTRONICS LETTERS, Bd. 26, No. 11, vom 24. Mai 1990, Seiten 707 und 708 und ELECTRONICS LETTERS, Bd. 27, No. 23, vom 07. November 1991, Seiten 2131-2133).

Problematisch ist die Kopplung zwischen Glasfaser und optischem Wellenleiter am Eingang des Verzweigers, insbesondere wegen eines nicht zu vermeidenden Versatzes zwischen Glasfaserkern und Wellenleiter. Wie im "IEEE JOURNAL OF LIGHTWAVE TECHNOLOGY; Bd. 10, No. 11, vom November 1992, Seiten 1570-1573" und in "OPTICS LETTERS, Bd. 16, No. 5, vom 1. März 1991, Seiten 309-311" berichtet wird, führt der Versatz selbst bei im Modenfeld an die Glasfasern angepaßten Wellenleitern zur Anregung von unerwünschten höheren Moden.

Diese höheren Moden können über relativ große Längen von beispielsweise mehreren Millimetern als quasi-geführte Moden mit einer oder auch mehreren im Wellenleiter geführten Moden interferieren und damit zu einem oszillatorischen Leistungsverlust der geführten Mode(n) über die optische Weglänge führen. Dies führt zu einer höheren Dämpfung und an Verzweigungsstellen auch zu einer ungleichmäßigen und polarisationsabhängigen Aufteilung der optischen Leistung auf die einzelnen Zweige.

Der Erfindung liegt die Aufgabe zugrunde, bei einem optischen Verzweiger gemäß Oberbegriff des Anspruchs 1, die optischen Verluste und die polarisationsabhängige ungleiche Lichtaufteilung zu reduzieren. Diese Aufgabe wird erfindungsgemäß durch einen Verzweiger mit den im Anspruch 1 angegebenen Merkmalen gelöst. In Unteransprüchen sind Ausgestaltungen des Verzweigers angegeben. Mit der Erfindung erzielbare Vorteile sind der Beschreibung zu entnehmen.

Die Erfindung wird anhand einer Zeichnung, in der ein Ausführungsbeispiel eines optischen Verzweigers als Ausschnitt schematisch dargestellt ist, wie folgt näher beschrieben:

In der Zeichnung ist der optische Verzweiger insgesamt mit 1 bezeichnet. Er besteht aus einem Trägerplättchen 2 mit einer integrierten optischen Komponente, die bei dem Ausführungsbeispiel eine als einfacher Y-Verzweiger ausgebildete Wellenleiterstruktur hat.

Auf dem Trägerplättchen 2, das z.B. aus Silizium besteht, ist, von diesem durch eine Pufferschicht getrennt, ein Wellenleiter 3 aus dotiertem SiOₓ aufgewachsen. Der Wellenleiter 3, der von einer weiteren Pufferschicht abgedeckt ist, ist beispielsweise 7 µm dick und in seiner Breite an das Profil einer Monomodefaser angepaßt. Typisch sind Wellenleiterquerschnitte von 7x7 µm². Der Brechzahlsprung zwischen Wellenleiter 3 und Pufferschichten beträgt z.B. 0.004. Selbstverständlich können auch andere Materialien zum Aufbau des optischen Verzweigers 1 Verwendung finden, wie z.B. neben III-V Halbleitern, Quarzglas, Lithiummiobat oder Lithiumtantalat.

Bei dem optischen Verzweiger 1 besteht die Wellenleiterstruktur des Trägerplättchens 2 eingangsseitig aus einem der Ankopplung einer Glasfaser dienenden Wellenleiter 3, einem sich daran anschließenden ersten Taper 4 und einem schmaleren Wellenleiterabschnitt 5. Durch einen nachgeordneten, zum ersten Taper 4 spiegelbildlich gestalteten zweiten Taper 6 wird der schmale Wellenleiterabschnitt 5 wieder aufgeweitet, z.B. auf die Breite des ursprünglichen Wellenleiters 3. Bei dem in der Zeichnung dargestellten Beispiel ist der zweite Taper 6 jedoch noch mehr bis zur doppelten Breite eines der zwei abgehenden Zweige 7 aufgeweitet, von denen jeder so breit wie der Wellenleiter 3 ist. Um eine definierte Trennung der Zweige 7 zu erreichen, kann bedarfsweise zwischen dem zweiten Taper 6 und den Zweigen 7 ein die optischen Wellenleiter unterbrechender Spalt vorgesehen sein (nicht dargestellt).

Bei kaskadiert angeordneten Y-Verzweigungen haben die divergierenden Wellenleiter jeder Verzweigung im allgemeinen unterschiedliche Längen bis zu dem Punkt, von dem an jeder Zweig 7 nach einer geeigneten Krümmung 8 mit Abstand parallel zum benachbarten Zweig 7 weiterführt.

Die Verbesserung der Eigenschaften des optischen Verzweigers 1 bestehen nun insbesondere darin, die Abstrahlung von unerwünschten quasi-geführten Moden im Wellenleiter über eine kurze Strecke sehr schnell zu erzwingen und damit den Effekt der kohärenten Kopplung zu vermeiden. Dies wird durch die als optisches Filter wirkende Einschnürung (Wellenleiterabschnitt 5) des Wellenleiters 3 vor der Verzweigung (Zweige 7) erreicht. Dabei ist unerheblich, ob es sich bei der optischen Wellenleiterstruktur um vergrabene, planar integrierte, oder um Streifenleiter handelt. Bei dem vorliegenden Ausführungsbeispiel der optischen Komponente wird die Einschnürung mittels Verengung der Breite des Wellenleiters 3 gebildet. Alternativ dazu kann die Einschnürung jedoch auch aus einem in der Dicke entsprechend reduzierten Wellenleiterabschnitt bestehen.

Es wurde festgestellt, daß der eingangs beschriebene Interferenzeffekt an allen Störungen im Wellenleiter auftreten kann, deshalb kann die Einschnürung bei jeder optischen Komponente vorgesehen werden, die wenigstens einen Wellenleiter hat, der in irgendeiner Weise gestört ist, wie beispielsweise durch eine Krümmung im Leitungszug oder wo auch immer unerwünschte Moden entstehen; z.B. an der Koppelstelle zwischen einem in das Substrat integrierten, an einen Wellenleiter gekoppelten Laser oder anderer optischer Komponenten. Sowohl bei dieser Koppelstelle als auch an der Koppelstelle für Glasfasern kann der eingangsseitige Wellenleiter 3 entfallen und der Laser oder die Glasfaser direkt an die Basis des ersten Tapers 4 gekoppelt sein. Durch diese Maßnahme bleibt der beabsichtigte Effekt die quasi-geführten Moden sehr schnell zu unterdrücken unbeeinflußt, jedoch gestattet sie die Herstellung von optischen Verzweigern 1 kurzer Baulänge.

Besteht die unerwünschte Moden verursachende Störungsquelle aus der Krümmung 8 eines Wellenleiters (Zweig 7), wird die Einschnürung nach dem Krümmungsende so angeordnet, daß die Einschnürung den gekrümmten Wellenleiter beinhaltet. Dadurch kann die Länge des eingeschnürten, sich linear erstreckenden Wellenleiters verkürzt werden. Allgemein kann bei kaskadierten Bauelementen der gesamte Wellenleiterbereich zwischen den Verzweigungsstufen mit verminderter Wellenleiterbreite ausgeführt werden, so daß der gesamte Wellenleiterzug bis zum aufweitenden Taper der nächsten Verzweigungsstufe eingeschnürt ist und als optisches Filter wirkt. Dadurch läßt sich die Baulänge nochmals verkürzen.

Bildet der zweite Taper 6 das ausgangsseitige Ende der Wellenleiterstruktur, kann er zur direkten Ankopplung einer Glasfaser oder anderer Komponenten dienen, oder es kann sich an den Taper (6) ein linear erstreckender Wellenleiter anschließen, an den die Glasfaser oder eine andere Komponente angekoppelt wird.

Die Abmessungen der Einschnürung sind von der Auslegung der optischen Komponente abhängig. Typisch sind Auslegungen für Wellenlängen von 1300 nm und 1550 nm. Bei einem optischen Verzweiger 1, der integrierte Wellenleiter mit einer Breite von etwa 7 µm hat, haben die Taper 4, 6 einen auf die Mittelachse des Wellenleiters 3 bezogenen Ausgangswinkel α, der z.B. 0,1^{o} bis 1,0 ^{o} beträgt, einen Wellenleiterabschnitt 5, der etwa zwischen 6,0 µm und 6,5 µm breit und einschließlich erstem Taper 4 ca. 1 mm bis 4 mm lang ist.

## Patentansprüche

1. Optischer Verzweiger mit einem Trägerplättchen (2) und wenigstens einem integrierten Wellenleiter (3) zur Ankopplung von Glasfasern und einer mindestens zwei weitere Zweige (7) aufweisenden optischen Leitungsstruktur,
**dadurch gekennzeichnet**, daß
der Wellenleiter (3) vor der Verzweigung eine Einschnürung hat.

2. Optischer Verzweiger nach Anspruch 1, dadurch gekennzeichnet, daß bei einer als kaskadierter Y-Verzweiger ausgebildeten Leitungsstruktur vor jeder Verzweigung eine Einschnürung vorgesehen ist.

3. Optischer Verzweiger nach Anspruch 1, dadurch gekennzeichnet, daß die Einschnürung aus einem die Breite des Wellenleiters (3) auf einen schmalen Wellenleiterabschnitt (5) reduzierenden ersten Taper (4) und einem den schmalen Wellenleiterabschnitt (5) danach wieder aufweitenden zweiten Taper (6) besteht.

4. Optischer Verzweiger nach Anspruch 2 oder 3, dadurch gekennzeichnet, daß die gesamte Leitungsstruktur zwischen jeder Verzweigungsstufe und dem jeweils aufweitenden zweiten Taper (6) aus eingeschnürten Wellenleiterabschnitten (5) besteht.

5. Optischer Verzweiger nach Anspruch 3, dadurch gekennzeichnet, daß der erste Taper (4) unmittelbar an einem der Glasfaserankopplung dienenden Eingang der Leitungsstruktur angeordnet ist.

6. Optischer Verzweiger nach Anspruch 3, dadurch gekennzeichnet, daß der zweite Taper (6) unmittelbar an einem der Glasfaserankopplung dienenden Ausgang der Leitungsstruktur angeordnet ist.

7. Optischer Verzweiger nach Anspruch 3, dadurch gekennzeichnet daß bei einem etwa 7 µm breiten Wellenleiter (3) mit einem Brechzahlsprung von etwa 0.004 der schmale Wellenleiterabschnitt (5) eine Breite zwischen 6,0 µm und 6,5 µm hat.

8. Optischer Verzweiger nach Anspruch 3, dadurch gekennzeichnet, daß bei einem etwa 7 µm breiten Wellenleiter (3) mit einem Brechzahlsprung von etwa 0.004 die Taper (4,6) auf die Mittelachse des Wellenleiters (3) bezogen jeweils einen etwa zwischen 0,1 ^{o} bis 1 ^{o} liegenden Ausgangswinkel α haben.
